# EUROPÄISCHE PATENTSCHRIFT

(11) **EP 2 544 932 B1**
(45) Veröffentlichungstag und Bekanntmachung des Hinweises auf die Patenterteilung: **29.07.2020**
(21) Anmeldenummer: 11714497.2
(22) Anmeldetag: 08.03.2011
(51) Int. Cl.: B60T 8/34, B60T 8/36, B60T 13/68

(54) **MODULAR AUFGEBAUTE DRUCKSTEUERVORRICHTUNG EINER DRUCKMITTEL-BREMSANLAGE EINES FAHRZEUGS**
MODULARLY DESIGNED PRESSURE CONTROL DEVICE OF A PNEUMATIC BRAKE SYSTEM OF A VEHICLE
DISPOSITIF DE RÉGULATION DE PRESSION DE CONCEPTION MODULAIRE D'UN SYSTÈME DE FREINAGE À FLUIDE SOUS PRESSION D'UN VÉHICULE

(30) Priorität: 08.03.2010 DE 102010010606
(43) Veröffentlichungstag der Anmeldung: 16.01.2013
(73) Patentinhaber: KNORR-BREMSE Systeme für Nutzfahrzeuge GmbH, 80809 München (DE)
(72) Erfinder: RÖTHER, Friedbert, 74389 Cleebronn (DE); MUSTAPHA, Adnan, 75433 Maulbronn (DE); WIEDER, Gerhard, 74354 Besigheim (DE); BRENNER, Dirk, 70563 Stuttgart (DE)
(74) Vertreter: Wiedemann, Markus
(86) Internationale Anmeldenummer: PCT/EP2011/053141
(87) Internationale Veröffentlichungsnummer: WO 2011/110459

(56) Entgegenhaltungen:
- EP-A2- 0 274 610
- EP-A2- 0 604 864
- DE-A1- 2 810 219
- DE-A1- 10 038 046
- DE-A1- 10 236 922
- FR-A1- 2 419 199
- US-A- 6 048 040

## Beschreibung

Die Erfindung betrifft eine Drucksteuervorrichtung einer DruckmittelBremsanlage eines Fahrzeugs zum radindividuellen, wenigstens bremsschlupfabhängigen Steuern von Bremsdrücken in Bremszylindern von Rädern einer Achse, gemäß dem Oberbegriff von Anspruch 1.

Eine Drucksteuervorrichtung ist beispielsweise aus der DE 102 36 922 A1 bekannt, wobei die Drucksteuervorrichtung als 2-Kanal-Druckregelmoduk ausgebildet ist und eine zweikanalige Ventileinheit mit je einem Relaisventil je Kanal beinhaltet und jedem der beiden Relaisventile jeweils nur ein als 3/2-Wegeventil ausgebildetes Steuermagnetventil zugeordnet ist. Die beiden Kanäle können getrennt voneinander bremsschlupfgeregelt werden. Insbesondere Relaisventile, von denen das bekannte 2-Kanal-Druckregelmodul zwei aufweist bedingen jedoch einen gewissen Bauaufwand.

Eine gattungsgemäße Drucksteuervorrichtung ist aus DE 28 10 219 A1 bekannt.

Der Erfindung liegt die Aufgabe zugrunde, die bekannte Drucksteuervorrichtung der eingangserwähnten Art derart fortzubilden, dass sie lediglich durch Hinzufügen einzelner Komponenten hinsichtlich ihrer Regelungsfunktionen auf einfache Weise erweiterbar ist.

Diese Aufgabe wird erfindungsgemäß durch die Merkmale von Anspruch 1 gelöst.

### Offenbarung der Erfindung

Die Erfindung basiert auf dem Gedanken, dass die Drucksteuervorrichtung
a) ein einziges Relaisventil beinhaltet, mit einem von einem Vorratsdruck versorgten Vorratsanschluss, einem mit einer Drucksenke in Verbindung stehenden Entlüftungsanschluss, einem Steueranschluss und mit wenigstens zwei Arbeitsanschlüssen, wobei der eine Arbeitsanschluss wenigstens einem Bremszylinder eines Rades einer Fahrzeugseite der Achse und der andere Arbeitsanschluss des einzigen Relaisventils wenigstens einem Bremszylinder eines Rades der anderen Fahrzeugseite der Achse zugeordnet ist, wobei
b) jeder Arbeitsanschluss des Relaisventils mit einem von einem Steuergerät direkt oder indirekt gesteuerten und jeweils einer Fahrzeugseite zugeordneten 2/2-Wegeventil verbunden ist, welches abhängig von der Ansteuerung durch das Steuergerät entweder eine Verbindung zwischen dem betreffenden Arbeitsanschluss des Relaisventils und dem zugeordneten Bremszylinder herstellt oder diese Verbindung sperrt, und wobei
c) zur Realisierung einer Antriebsschlupfregelung (ASR) eine Ventileinrichtung mit einem einzigen vom Steuergerät elektrisch gesteuerten Magnetventil derart zusammen wirkt, dass der Steueranschluss des Relaisventils abhängig vom Antriebsschlupf der Räder der Achse mit dem fahrerbremswunschabhängig gebildeten Steuerdruck, einem Vorratsdruck eines Druckreservoirs oder mit einer Drucksenke verbunden wird.

### Erfindungsgemäß ist vorgesehen, dass

d) der Steueranschluss des Relaisventils mittels der durch zwei 2/2-Wege-Magnetventile gebildeten und mittels des Steuergeräts gesteuerten Ventileinrichtung entweder mit einem fahrerbremswunschabhängig gebildeten Bremssteuerdruck oder mit einer Drucksenke verbindbar ist, wobei
e) das eine 2/2-Wege-Magnetventil der die Ventileinrichtung bildenden beiden 2/2-Wege-Magnetventile ein Auslassventil ist, das den Steueranschluss des Relaisventils entweder mit einer Drucksenke verbindet oder diese Verbindung sperrt, und dass
f) das andere 2/2-Wege-Magnetventil der die Ventileinrichtung bildenden beiden 2/2-Wege-Magnetventile ein Backup-Ventil eines Elektronischen Bremssystems (EBS) mit vorrangigem elektro-pneumatischen Bremskreis und nachrangigem pneumatischem Bremskreis ist, dass den Steueranschluss des Relaisventils entweder mit dem fahrerbremswunschabhängig gebildeten Steuerdruck verbindet oder diese Verbindung sperrt, und dass
g) das zur Realisierung der Antriebsschlupfregelung der Achse vorgesehene einzige zusätzliche Magnetventil ein als 2/2-Wege-Magnetventil ausgebildetes Einlassventil ist, mit einer Durchgangsstellung und einer Sperrstellung, wobei das Einlassventil in der Durchlassstellung den Steueranschluss des Relaisventils mit dem Vorratsdruck belüftet, wobei
h) die Drucksteuerventileinrichtung zur Ausbildung des Elektronischen Bremssystems (EBS) mit vorrangigem elektro-pneumatischen Bremskreis und nachrangigem pneumatischem Bremskreis wenigstens einen mit wenigstens einem Arbeitsanschluss des Relaisventils in druckleitender Verbindung stehenden Drucksensor beinhaltet, wobei
i) das Steuergerät ausgebildet ist, dass es durch Steuerung des Einlassventils und des Auslassventils den von dem wenigstens einen Drucksensor gemessenen Ist-Bremsdruck an einen fahrerbremswunschabhängig gebildeten Soll-Bremsdruck anpasst.

Es wird daher nur ein einziges Relaisventil verwendet, um eine radindividuelle Steuerung großer Druckmittelquerschnitte in den Bremszylindern unter anderem durch einen zentralen, relativ kleinen Steuerdruckstrom zu realisieren. Dadurch ist die Drucksteuervorrichtung insgesamt sehr kostengünstig herzustellen.

Ausgehend von einem ABS-tauglichen Grundlayout wirkt die Ventileinrichtung zur Realisierung einer Antriebsschlupfregelung (ASR) mit lediglich einem einzigen, vom Steuergerät elektrisch gesteuerten Magnetventil derart zusammen, dass der Steueranschluss des einzigen Relaisventils abhängig vom Antriebsschlupf der Räder der Achse mit dem fahrerbremswunschabhängig gebildeten Steuerdruck, einem Vorratsdruck eines Druckreservoirs oder mit einer Drucksenke verbunden wird.

In vorteilhafter Weise wird das ABS-taugliche Grundlayout der Drucksteuervorrichtung daher um lediglich ein einziges Magnetventil ergänzt, um zusätzlich eine radindividuelle Antriebsschlupfregelung (ASR) zu realisieren.

In diesem Fall ist das Steuergerät ausgebildet, dass neben den ABS-Funktionen durch Steuerung wenigstens des einzigen zusätzlichen Magnetventils auch eine radindividuelle Antriebsschlupfregelung (ASR) realisiert wird.

Die Ventileinrichtung umfasst zwei 2/2-Wege-Magnetventile, wobei das eine 2/2-Wege-Magnetventil ein Auslassventil ist, das den Steueranschluss des einzigen Relaisventils entweder mit einer Drucksenke verbindet oder diese Verbindung sperrt, und das andere 2/2-Wege-Magnetventil ein auch als Backup-Ventil eines Elektronischen Bremssystems (EBS) nutzbares Ventil ist, das den Steueranschluss des einzigen Relaisventils entweder mit dem fahrerbremswunschabhängig gebildeten Steuerdruck verbindet oder diese Verbindung sperrt. Das zur Realisierung der Antriebsschlupfregelung der Achse vorgesehene einzige zusätzliche Magnetventil ist ein als 2/2-Wege-Magnetventil ausgebildetes Einlassventil.

Durch das Einlassventil, das Auslassventil und das Backup-Ventil wird dann nicht nur eine Antriebsschlupfregelung sondern auch ein Elektronisches Bremssystems (EBS) mit vorrangigem elektro-pneumatischen Bremskreis und nachrangigem pneumatischem Bremskreis ausgebildet, welches darüber hinaus wenigstens einen mit wenigstens einem Arbeitsanschluss des einzigen Relaisventils in druckleitender Verbindung stehenden Drucksensor beinhaltet.

Dafür wird das ABS-taugliche Grundlayout mit einer aus zwei 2/2-Wege-Magnetventilen (Auslassventil, Backup-Ventil) bestehenden Ventileinrichtung zur Steuerung des einzigen Relaisventils um lediglich ein als 2/2-Wege-Magnetventil ausgebildetes Einlassventil ergänzt, um zusammen mit wenigstens einem Drucksensor und einem geeignet programmierten Steuergerät ein vollständiges Elektronisches Bremssystem (EBS) inklusive Antriebsschlupfregelung für die betreffende Achse auszubilden.

Das Steuergerät ist ausgebildet, dass es neben Ausführung der ABS- und ASR-Funktionen auch durch Steuerung des Einlassventils und des Auslassventils den von dem wenigstens einen Drucksensor gemessenen Ist-Bremsdruck an einen fahrerbremswunschabhängig gebildeten Soll-Bremsdruck im Sinne einer Bremsdruckregelung anpasst.

Durch die in den Unteransprüchen aufgeführten Maßnahmen sind vorteilhafte Weiterbildungen und Verbesserungen der in Anspruch 1 angegebenen Erfindung möglich.

Besonders bevorzugt sind die 2/2-Wegeventile Membranventile, welche durch jeweils ein vom Steuergerät elektrisch gesteuertes und derselben Fahrzeugseite zugeordnetes 3/2-Wege-Vorsteuer-Magnetventil pneumatisch vorgesteuert werden. Dadurch können große Druckmittelströme mit geringen Steuerdruckmittelströmen relativ schnell in die Bremszylinder eingesteuert werden.

Dabei sind die 3/2-Wege-Vorsteuer-Magnetventile bevorzugt ausgebildet, dass sie abhängig von einer Steuerung durch das Steuergerät einerseits den Vorratsdruck des Druckreservoirs oder den fahrerbremswunschabhängigen gebildeten Steuerdruck an einen Steueranschluss des zugeordneten 2/2-Wegeventils durchsteuern oder andererseits diesen Steueranschluss mit einer Drucksenke verbinden.

Der Fall, dass die 3/2-Wege-Vorsteuer-Magnetventile den fahrerbremswunschabhängigen gebildeten Steuerdruck an den Steueranschluss des zugeordneten 2/2-Wegeventils durchsteuern bringt den Vorteil mit sich, dass wenn sich das ABS während einer fahrerinitiierten Bremsung in einer Druckhaltephase befindet und der Fahrer während dieser Druckhaltephase das Bremspedal löst, der fahrerbremswunschabhängig gebildete Steuerdruck sinkt und damit auch in das während der Druckhaltephase geschlossene zugeordnete 2/2-Wegeventil öffnen kann, um Bremsdruck abzubauen (Drucksenken). Dadurch gewinnt der Fahrer einen größeren Einfluss und kann die ABS-Funktionen "überspielen".

Im anderen Fall, wenn die 3/2-Wege-Vorsteuer-Magnetventile den Vorratsdruck des Druckreservoirs an den Steueranschluss des zugeordneten 2/2-Wegeventils durchsteuern würde ein Lösen des Bremspedals während einer Druckhaltephase des ABS nicht zu einer Senkung des Bremsdrucks im Bremszylinder führen. Dies würde erst im Rahmen des nächsten ABS-Zyklusses (Drucksenken) allerdings ohne Eingriffsmöglichkeit durch den Fahrer möglich sein.

Das Steuergerät ist dabei ausgebildet, dass durch Steuerung wenigstens der Ventileinrichtung und der jeweils einer Fahrzeugseite zugeordneten 2/2-Wegeventile eine radindividuelle Bremsschlupfregelung im Rahmen der typischen ABS-Funktionen Drucksteigern, Druckhalten und Druckabbau zum Erzielen eines optimalen Radschlupfes realisiert wird.

Zur Ausbildung einer Fahrdynamikregelung ESP wird lediglich ein weiterer Drucksensor zur Messung des fahrerbremswunschabhängig gebildeten Steuerdrucks vorgesehen. Dann ist am Fahrzeug jeder Achse wenigstens eine Drucksteuervorrichtung der beschriebenen Art zugeordnet. Das ESP erweitert die ABS-/ASR-Regelung um die Größen der Fahrzeugbewegung, d.h. um die Querdynamik durch Bilden eines korrigierenden Giermoments bei Übersteuern bzw. Untersteuern. Dieses korrigierende Giermoment wird dann durch Bremsen einzelner Räder oder mehrerer Räder mittels der erfindungsgemäßen Drucksteuervorrichtung in einen Radschlupf umgesetzt.

Beispielsweise ist das Steuergerät ausgebildet, dass es bei einer durch die Fahrdynamikregelung ESP initiierten Bremsung wenigstens die Ventileinrichtung sowie das einzige zusätzliche Magnetventil derart steuert, dass der Steueranschluss des Relaisventils abhängig von der Gierrate des Fahrzeugs durch den Vorratsdruck des Druckreservoirs beaufschlagt wird, das dem einen Bremszylinder der einen Fahrzeugseite zugeordnete 2/2-Wegeventil in Durchlassstellung geschaltet und das dem anderen Bremszylinder der anderen Fahrzeugseite zugeordnete 2/2-Wegeventil in Sperrstellung geschaltet wird.

Insgesamt unterscheiden sich die verschiedenen Ausbaustufen ausgehend von dem ABS-tauglichen Grundlayout um lediglich ein einziges Ventil, um zusätzlich eine ASR-Funktion, ein EBS oder ein EBS mit Fahrdynamikregelung ESP zu realisieren. Hierdurch ergibt sich ein modularer Aufbau der Drucksteuervorrichtung, ohne dass die jeweils im Umfang einfachere Ausbaustufe in ihrem Aufbau verändert werden müsste, um das hinzuzufügende Ventil in den Aufbau integrieren zu können.

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt
- Fig.: einen Schaltplan einer Drucksteuervorrichtung eines pneumatischen Fahrzeugbremssystems mit ABS;
- Fig.2: einen Schaltplan einer Drucksteuervorrichtung eines pneumatischen Fahrzeugbremssystems mit ABS gemäß einer weiteren Ausführungsform;
- Fig.3: einen Schaltplan einer Drucksteuervorrichtung eines pneumatischen Fahrzeugbremssystems mit ABS gemäß einer weiteren Ausführungsform;
- Fig.4: einen Schaltplan einer Drucksteuervorrichtung eines pneumatischen Fahrzeugbremssystems mit ABS und ASR gemäß einer weiteren Ausführungsform;
- Fig.5: einen Schaltplan einer Drucksteuervorrichtung eines pneumatischen Fahrzeugbremssystems mit ABS und ASR gemäß einer weiteren Ausführungsform;
- Fig.6: einen Schaltplan einer Drucksteuervorrichtung eines pneumatischen als Elektronisches Bremssystem EBS ausgebildeten Fahrzeugbremssystems mit ABS-/ASR-und ESP-Funktionalität gemäß einer bevorzugten Ausführungsform der Erfindung.

### Beschreibung der Ausführungsbeispiele

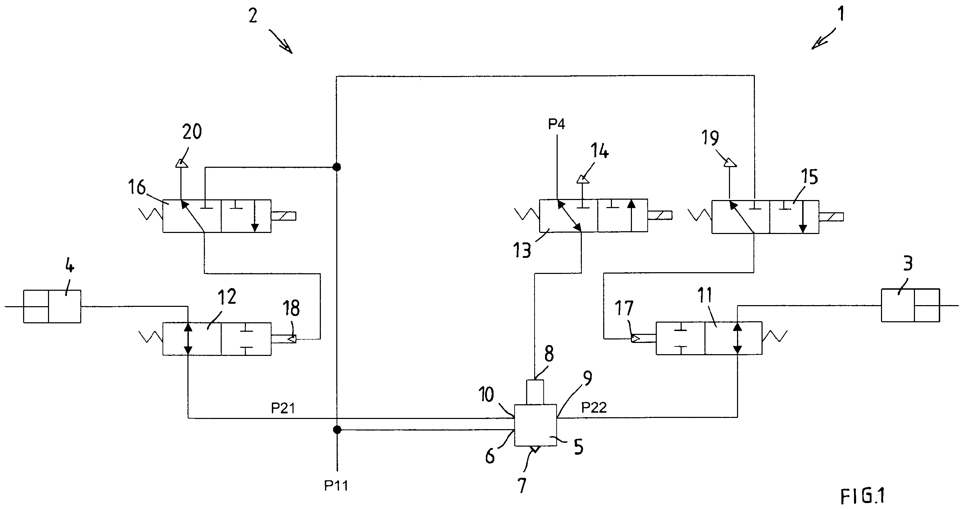

In **Fig. 1** ist mit 1 ein Ausführungsbeispiel einer Drucksteuervorrichtung bezeichnet, welches eine Ventileinheit 2 sowie eine damit mechanisch und elektrisch direkt verbundene Elektronikeinheit als Steuergerät umfasst, welches hier aus Maßstabsgründen nicht dargestellt ist. Die Drucksteuervorrichtung 1 ist bevorzugt in eine Druckluft-Bremsanlage eines Nutzfahrzeugs integriert.

Die Drucksteuervorrichtung 1 ist zum radindividuellen, wenigstens bremsschlupfabhängigen Steuern von Bremsdrücken in Bremszylindern 3, 4 von Rädern einer beispielsweise angetriebenen Achse ausgebildet. Hierzu umfasst sie ein einziges Relaisventil 5, mit einem von einem Vorratsdruck p11 versorgten Vorratsanschluss 6, einem mit einer Drucksenke in Verbindung stehenden Entlüftungsanschluss 7, einem Steueranschluss 8 und mit zwei Arbeitsanschlüssen 9, 10.

Dabei ist ein Arbeitsanschluss 9 einem Bremszylinder 3 eines Rads einer Fahrzeugseite der Achse und der andere Arbeitsanschluss 10 des einzigen Relaisventils 5 dem Bremszylinder 4 des Rads der anderen Fahrzeugseite der Achse zugeordnet, um einen Bremsdruck p21 in den Bremszylinder 4 bzw. einen Bremsdruck p22 in den Bremszylinder 3 einsteuern zu können. Weiterhin ist jeder Arbeitsanschluss 9, 10 des Relaisventils 5 mit einem von dem Steuergerät bevorzugt indirekt gesteuerten und jeweils einer Fahrzeugseite zugeordneten 2/2-Wegeventil 11, 12 verbunden.

Die 2/2-Wegeventile 11, 12 stellen abhängig von einer hier bevorzugt indirekten Ansteuerung durch das Steuergerät entweder eine Verbindung zwischen dem betreffenden Arbeitsanschluss 9, 10 des Relaisventils 5 und dem zugeordneten Bremszylinder 3, 4 her oder sie sperren diese Verbindung.

Gemäß der Ausführungsform von **Fig. 1** ist der Steueranschluss 8 des Relaisventils mittels einer durch beispielsweise ein 3/2-Wege-Magnetventil 13 gebildeten und mittels des Steuergeräts gesteuerten Ventileinrichtung entweder mit einem fahrerbremswunschabhängig gebildeten Bremssteuerdruck p4 oder mit einer Drucksenke 14 verbindbar. Das 3/2-Wege-Magnetventil 13 ist bevorzugt federbelastet und dadurch stromlos in die Schaltstellung vorgespannt, in welcher es den Steueranschluss 8 des Relaisventils 5 mit dem fahrerbremswunschabhängig gebildeten Bremssteuerdruck p4 verbindet. Bestromt wird der Steueranschluss 8 des Relaisventils 5 hingegen mit der Drucksenke 14 verbunden.

Der fahrerbremswunschabhängig gebildete Bremssteuerdruck p4 wird dabei beispielsweise von einem hier nicht gezeigten fahrerbetätigten Fußbremsmodul erzeugt.

Besonders bevorzugt sind die 2/2-Wegeventile 11, 12 pneumatisch steuerbare Membranventile, welche bevorzugt durch jeweils ein vom Steuergerät elektrisch gesteuertes und derselben Fahrzeugseite zugeordnetes 3/2-Wege-Vorsteuer-Magnetventil 15, 16 pneumatisch vorgesteuert werden. Dabei sind die 3/2-Wege-Vorsteuer-Magnetventile 15, 16 bevorzugt ausgebildet, dass sie abhängig von einer Steuerung durch das Steuergerät den Vorratsdruck p11 des Druckreservoirs an einen Steueranschluss 17, 18 des zugeordneten 2/2-Wegeventils 11, 12 durchsteuern oder andererseits diesen Steueranschluss 17, 18 mit einer Drucksenke 19, 20 verbinden. Die 3/2-Wege-Vorsteuer-Magnetventile 15, 16 sind bevorzugt federbelastet und dadurch stromlos in die Schaltstellung vorgespannt, in welcher sie den Steueranschluss 17, 18 des zugeordneten 2/2-Wegeventils 11, 12 mit der Drucksenke verbinden. Bestromt werden die Steueranschlüsse 17, 18 der 2/2-Wegeventile 11, 12 dagegen mit der Drucksenke 19, 20 verbunden.

Das Steuergerät ist dabei ausgebildet, dass durch Steuerung des 3/2-Wege-Magnetventils 13 und der beiden 3/2-Wege-Vorsteuer-Magnetventile 15, 16 zur indirekten Steuerung der 2/2-Wegeventile 11, 12 eine radindividuelle Bremsschlupfregelung im Rahmen der typischen ABS-Funktionen Drucksteigern, Druckhalten und Drucksenken zum Erzielen eines optimalen Soll-Bremsschlupfes realisiert wird. Zur Berechnung des Ist-Bremsschlupfes erhält das Steuergerät in bekannter Weise Informationen über die Raddrehzahlen der Räder der Achse über hier nicht gezeigte Raddrehzahlsensoren.

Vor diesem Hintergrund ergibt sich folgende Funktionsweise der in **Fig. 1** dargestellten Drucksteuereinrichtung 1:
Während einer normalen Betriebsbremsung befinden sich das zentrale 3/2-Wege-Magnetventil 13 zur Vorsteuerung des Relaisventils 5 und die beiden 3/2-Wege-Vorsteuer-Magnetventile 15, 16 in der in Fig.1 gezeigten federbetätigten stromlosen Grundstellung, so dass das 3/2-Wege-Magnetventil 13 den Steueranschluss 8 des Relaisventils 5 mit dem fahrerbremswunschabhängig gebildeten Bremssteuerdruck p4 verbindet. Folglich moduliert das Relaisventil 5 aus diesem Bremssteuerdruck p4 einen Bremsdruck p21 bzw. p22 an seinen beiden Arbeitsanschlüssen 9, 10. Da sich die beiden 3/2-Wege-Vorsteuer-Magnetventile 15, 16 ebenfalls in ihrer stromlosen Grundstellung befinden, sind die pneumatischen Steueranschlüsse 17, 18 der beiden 2/2-Wegeventile 11, 12 jeweils mit den Drucksenken 19, 20 verbunden, so dass sie sich in der in **Fig. 1** gezeigten Durchlassstellung befinden, um den an den Arbeitsanschlüssen 9, 10 des Relaisventils 5 anstehenden Bremsdruck p21 bzw. p22 in die Bremszylinder 3, 4 einzusteuern. Die Bremsdrücke p21 bzw. p22 für die eine Fahrzeugseite und die andere Fahrzeugseite sind dabei im Wesentlichen gleich groß.

Während einer ABS- oder bremsschlupfgeregelten Bremsung mit einer nur einseitigen Blockierneigung wird das 3/2-Wege-Magnetventil 13 zunächst bestromt und dadurch in seine Entlüftungsstellung geschaltet, in welcher der Steueranschluss 8 des Relaisventils 5 mit der Drucksenke 14 verbunden wird. Dadurch werden beide Arbeitsanschlüsse 9, 10 des Relaisventils 5 mit seiner Drucksenke 7 verbunden. Gleichzeitig wird auf der Fahrzeugseite, auf welcher kein Radblockieren auftritt, das 3/2-Wege-Vorsteuer-Magnetventil 15 vom Steuergerät durch Bestromen in die Stellung geschaltet, in welcher der Steueranschluss 17 des betreffenden 2/2-Wegeventils mit dem Vorratsdruck p11 beaufschlagt wird. Dadurch schaltet das 2/2-Wegeventil 11 in seine Sperrstellung und hält dadurch den Bremsdruck p22 in dem Bremszylinder 3 des nicht blockierenden Rades (Druckhalten). Hingegen wird auf der Fahrzeugseite, auf welcher Radblockieren detektiert wurde, das 3/2-Wege-Vorsteuer-Magnetventil 16 vom Steuergerät nicht umgeschaltet, sondern es verbleibt in seiner stromlosen Grundstellung, in welcher der Steueranschluss 18 des betreffenden 2/2-Wegeventils 12 auf die Drucksenke 20 geschaltet bleibt. Dadurch verbleibt das 2/2-Wegeventil 12 in seiner in Fig.1 gezeigten Durchlassstellung, wodurch sich der Bremsdruck p21 im Bremszylinder 4 des blockierenden Rades über die Drucksenke 7 des Relaisventils 5 abbauen kann (Drucksenken).

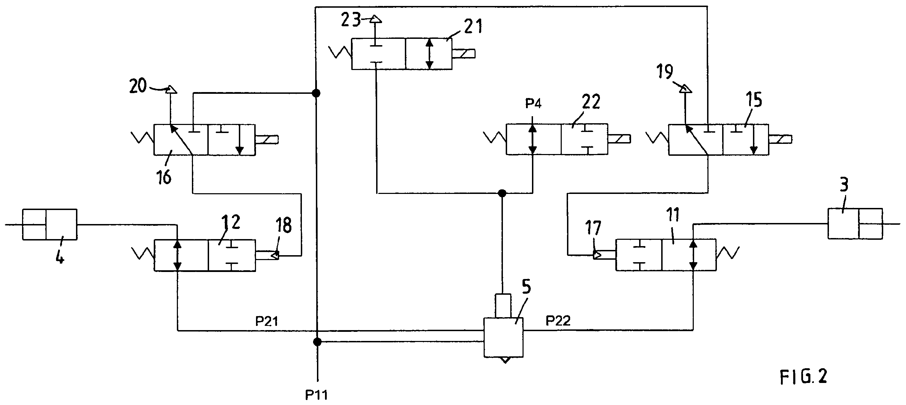

Bei den Ausführungsbeispielen nach **Fig. 2** bis **Fig. 6** sind die gegenüber dem Ausführungsbeispiel gleichbleibenden und gleich wirkenden Teile durch die gleichen Bezugszeichen gekennzeichnet.

Bei dem Ausführungsbeispiel von **Fig. 2** besteht die Ventileinrichtung anstatt aus einem einzigen 3/2-Wege-Magnetventil aus zwei 2/2-Wege-Magnetventilen 21, 22, wobei das eine 2/2-Wege-Magnetventil 21 als Auslassventil den Steueranschluss 8 des Relaisventils 5 entweder mit einer Drucksenke 23 verbindet oder diese Verbindung wie gezeigt sperrt. Andererseits verbindet das weitere 2/2-Wege-Magnetventil 22 den Steueranschluss 8 des Relaisventils 5 entweder mit dem fahrerbremswunschabhängig gebildeten Bremssteuerdruck p4 oder sperrt diese Verbindung. Beide 2/2-Wege-Magnetventile 21, 22 sind federbelastet in ihre in Fig.2 gezeigte Grundstellung geschaltet, in welcher das eine 2/2-Wege-Magnetventil 21 in Sperrstellung und das andere 2/2-Wege-Magnetventil 22 in Durchlassstellung geschaltet ist.

Vor diesem Hintergrund ergibt sich folgende Funktionsweise der in **Fig. 2** dargestellten Drucksteuereinrichtung 1:
Während einer normalen Betriebsbremsung befindet sich das eine 2/2-Wege-Magnetventil 21 in stromloser Sperrstellung, das andere 2/2-Wege-Magnetventil 22 hingegen in Durchlassstellung. Weiterhin befinden sich auch die beiden 3/2-Wege-Vorsteuer-Magnetventile 15, 16 in der in Fig.2 gezeigten federbetätigten stromlosen Grundstellung, so dass das andere 2/2-Wege-Magnetventil 22 den Steueranschluss 8 des Relaisventils 5 mit dem fahrerbremswunschabhängig gebildeten Bremssteuerdruck p4 verbindet, wie Fig.2 zeigt. Wie zuvor beschrieben moduliert das Relaisventil 5 aus diesem Bremssteuerdruck p4 einen Bremsdruck p21 bzw. p22 an seinen beiden Arbeitsanschlüssen 9, 10. Da sich die beiden 3/2-Wege-Vorsteuer-Magnetventile 15, 16 ebenfalls in ihrer stromlosen Grundstellung befinden, sind die pneumatischen Steueranschlüsse 17, 18 der beiden 2/2-Wegeventile 11, 12 jeweils mit den Drucksenken 19, 20 verbunden, so dass sie sich in der in Fig.2 gezeigten Durchlassstellung befinden, um den an den Arbeitsanschlüssen 9, 10 des Relaisventils 5 anstehenden Bremsdruck p21 bzw. p22 in die Bremszylinder 3, 4 einzusteuern. Die Bremsdrücke p21 bzw. p22 für die eine Fahrzeugseite und die andere Fahrzeugseite sind dabei im Wesentlichen gleich groß.

Während einer ABS- oder bremsschlupfgeregelten Bremsung mit einer nur einseitigen Blockierneigung wird das eine 2/2-Wege-Magnetventil als Auslassventil 21 bestromt und dadurch in seine Durchlassstellung geschaltet, in welcher der Steueranschluss 8 des Relaisventils 5 mit der Drucksenke 23 verbunden wird. Auch das weitere 2/2-Wege-Magnetventil 22 wird bestromt und dadurch in seine Sperrstellung geschaltet, wodurch der Steueranschluss 8 des Relaisventils 5 vom Bremssteuerdruck p4 abgekoppelt wird. Dadurch werden beide Arbeitsanschlüsse 9, 10 des Relaisventils 5 mit seiner Drucksenke 7 verbunden. Die Schaltung der beiden 3/2-Wege-Vorsteuer-Magnetventile 15, 16 erfolgt wie beim vorangehenden Ausführungsbeispiel beschrieben, so dass das 2/2-Wegeventil 11 der nicht blockierenden Fahrzeugseite in seine Sperrstellung geschaltet wird, wodurch der Bremsdruck p22 in dem Bremszylinder 3 des nicht blockierenden Rades gehalten wird. (Druckhalten). Hingegen wird auf der Fahrzeugseite, auf welcher Radblockieren detektiert wurde, das 3/2-Wege-Vorsteuer-Magnetventil 16 vom Steuergerät nicht umgeschaltet, sondern es verbleibt in seiner stromlosen Grundstellung, in welcher der Steueranschluss 18 des betreffenden 2/2-Wegeventils 12 auf die Drucksenke 20 geschaltet bleibt. Dadurch verbleibt das 2/2-Wegeventil 12 in seiner in Fig.2 gezeigten Durchlassstellung, wodurch sich der Bremsdruck p21 im Bremszylinder 4 des blockierenden Rades über die Drucksenke 7 des Relaisventils 5 abbauen kann (Drucksenken).

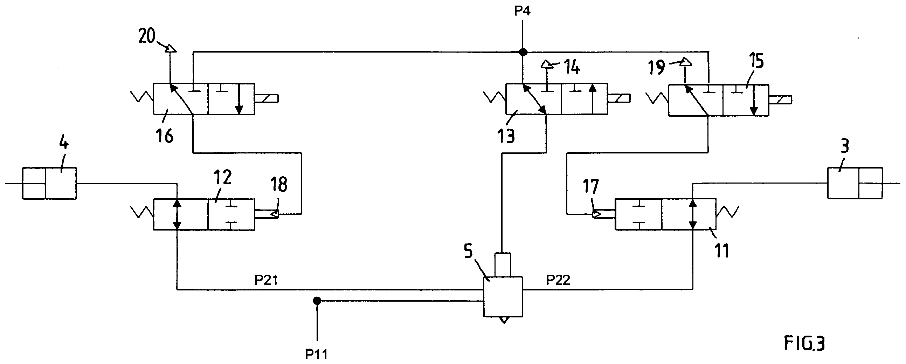

Gemäß der Ausführungsform von **Fig. 3** wird im Unterschied zu den Ausführungsformen nach Fig.1 und Fig.2 nicht ein Vorratsdruck p11 eines Druckreservoirs sondern der fahrerbremswunschabhängig gebildete Bremssteuerdruck p4 über die beiden 3/2-Wege-Vorsteuer-Magnetventile 15, 16 auf die Steueranschlüsse 17, 18 der 2/2-Wegeventile 11, 12 geschaltet. Wenn sich dann das ABS während einer fahrerinitiierten Bremsung in einer Druckhaltephase befindet und der Fahrer während dieser Druckhaltephase das Bremspedal löst, sinkt der fahrerbremswunschabhängig gebildete Steuerdruck p4, so dass das während der Druckhaltephase geschlossene zugeordnete 2/2-Wegeventil 11 bzw. 12 öffnen kann, um Bremsdruck p21 bzw. p22 abzubauen (Drucksenken).

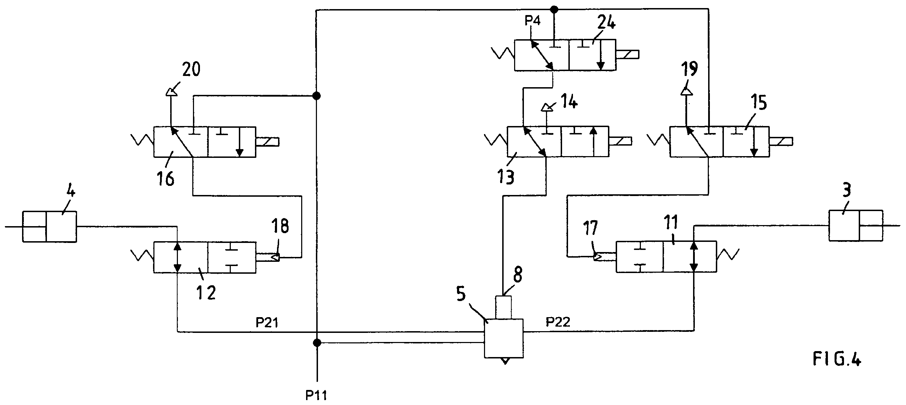

Das ABS-taugliche Grundlayout gemäß **Fig. 1** bis **Fig. 3** wird zur Realisierung einer Antriebsschlupfregelung (ASR) durch lediglich ein vom Steuergerät elektrisch gesteuertes Magnetventil 24 gemäß der Ausführungsform von **Fig. 4** ergänzt. Dieses Magnetventil 24 wirkt dann mit der Ventileinrichtung 13 derart zusammen, dass der Steueranschluss 8 des einzigen Relaisventils 5 abhängig vom Antriebsschlupf der Räder der Achse mit dem fahrerbremswunschabhängig gebildeten Steuerdruck p4, dem Vorratsdruck p11 des Druckreservoirs oder mit einer Drucksenke 14 verbunden wird. Bevorzugt ist dabei das einzige zusätzliche Magnetventil ein 3/2-Wege-Magnetventil 24, die Ventileinrichtung wird analog zu Fig.1 ebenfalls durch ein 3/2-Wege-Magnetventil 13 gebildet.

In diesem Fall ist das Steuergerät ausgebildet, dass neben den ABS-Funktionen durch Steuerung wenigstens des zusätzlichen 3/2-Wege-Magnetventils auch eine radindividuelle Antriebsschlupfregelung (ASR) realisiert wird. Dieses zusätzliche 3/2-Wege-Magnetventil 24 ist steuerseitig des Relaisventils 5 gesehen dem die Ventileinrichtung bildenden 3/2-Wege-Magnetventil 13 vorgeschaltet. Es schaltet in seiner federbelasteten stromlosen Grundstellung den fahrerbremswunschabhängig gebildeten Steuerdruck p4 und in seiner bestromten Schaltstellung den Vorratsdruck p11 auf das 3/2-Wege-Magnetventil 13 weiter.

Für den Fall, dass kein übermäßiger Antriebsschlupf an beiden Rädern der Achse vorliegt, schaltet das zusätzliche ASR-Ventil 24 den fahrerbremswunschabhängig gebildeten Steuerdruck p4 auf das 3/2-Wege-Magnetventil 13 weiter, wodurch der Steueranschluss 8 des Relaisventils 5 wie zum Ausführungsbeispiel von Fig.1 beschrieben belüftet bzw. entlüftet, je nachdem ob der fahrerbremswunschabhängig gebildete Steuerdruck p4 einen Bremslöse-Steuerdruck oder einen Bremszuspann-Steuerdruck repräsentiert. Im Falle eines Bremslöse-Steuerdrucks p4, d.h. bei nicht betätigtem Fußbremsventil steuert das Relaisventil 5 lediglich einen niedrigen Bremslösedruck p21 bzw. p22 an seine Arbeitsanschlüsse 9, 10 aus, so dass beide Radbremszylinder 3, 4 gelöst sind.

Im Falle unzulässigen Antriebsschlupfes schaltet das zusätzliche ASR-Ventil 24 hingegen den Vorratsdruck p11auf das diesbezüglich in Durchlassstellung geschaltete 3/2-Wege-Magnetventil 13 weiter, wodurch der Steueranschluss 8 des Relaisventils 5 durch einen Bremszuspann-Steuerdruck belüftet wird und daher einen Bremszuspanndruck an seine Arbeitsanschlüsse 9, 10 aussteuert. Die Schaltstellungen der 3/2-Wege-Vorsteuer-Magnetventile 15, 16 und der beiden 2/2-Wegeventile 11, 12 sind dann wie in Fig.4 gezeigt, so dass die Radbremszylinder 3, 4 der Achse während des Vorliegens unzulässigen Radschlupfes im Sinne einer Radschlupfregelung temporär zugespannt werden.

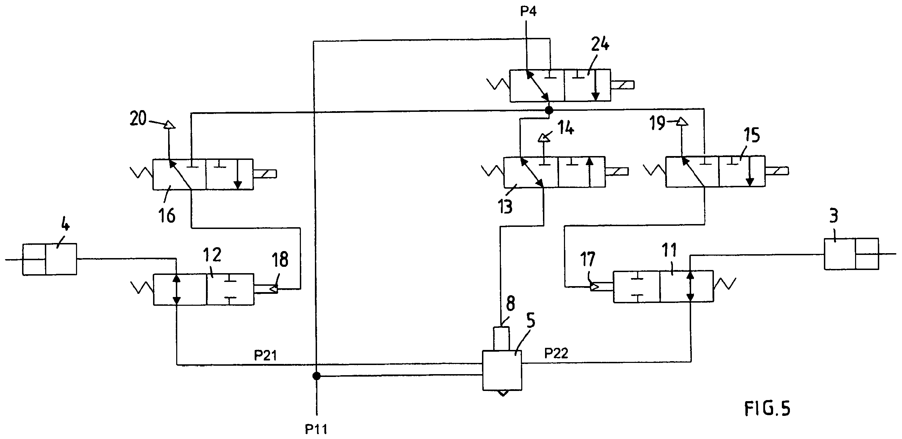

Gemäß einer hierzu alternativen Ausführungsform nach Fig.5 wird wie bei der Ausführungsform von Fig.3 nicht der Vorratsdruck p11 des Druckreservoirs sondern der fahrerbremswunschabhängig gebildete Bremssteuerdruck p4 über die beiden 3/2-Wege-Vorsteuer-Magnetventile 15, 16 auf die Steueranschlüsse 17, 18 der beiden 2/2-Wegeventile 11, 12 geschaltet. Wenn sich dann das ASR in einer Druckhaltephase befindet und der Fahrer während dieser Druckhaltephase das Bremspedal betätigt, steigt der fahrerbremswunschabhängig gebildete Steuerdruck p4, so dass das während der Druckhaltephase geschlossene zugeordnete 2/2-Wegeventil 11 bzw. 12 öffnen kann, um Bremsdruck p21 bzw. p22 aufzubauen (Drucksteigern).

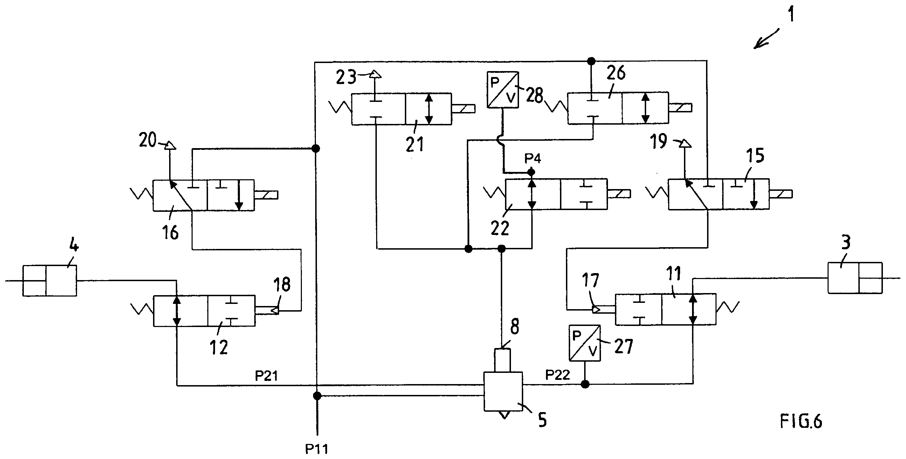

Falls die Ventileinrichtung kein 3/2-Wege-Magnetventil 13 sondern zwei 2/2-Wege-Magnetventile 21, 22 gemäß Fig.3 und Fig.6 umfasst, so ist das eine 2/2-Wege-Magnetventil 21 bevorzugt ein Auslassventil, das den Steueranschluss 8 des Relaisventils 5 entweder mit seiner Drucksenke 23 verbindet oder diese Verbindung sperrt. Das andere 2/2-Wege-Magnetventil 22 ist insbesondere ein auch als Backup-Ventil eines EBS nutzbares Ventil, das den Steueranschluss 8 des Relaisventils 5 entweder mit dem fahrerbremswunschabhängig gebildeten Steuerdruck p4 verbindet oder diese Verbindung sperrt. Das zur Realisierung der Antriebsschlupfregelung der Achse vorgesehene einzige zusätzliche Magnetventil ist gemäß der erfindungsgemäßen Ausführungsform von **Fig. 6** ein als 2/2-Wege-Magnetventil ausgebildetes Einlassventil 26. Gemäß **Fig. 6** wird durch das Einlassventil 26, das Auslassventil 21 und das Backup-Ventil 22 dann nicht nur eine Bremsschlupfregelung (ABS) und eine Antriebsschlupfregelung (ASR) sondern auch ein Elektronisches Bremssystems (EBS) mit vorrangigem elektro-pneumatischen Bremskreis und nachrangigem pneumatischem Bremskreis ausgebildet, falls zusätzlich noch beispielsweise ein Arbeitsanschluss 9, 10 des einzigen Relaisventils 5 in druckleitender Verbindung mit einem Drucksensor 27 steht.

Das Steuergerät ist in diesem Fall ausgebildet, dass es neben Ausführung der ABS- und ASR-Funktionen auch durch Steuerung des Einlassventils 26 und des Auslassventils 21 den von dem Drucksensor 27 gemessenen Ist-Bremsdruck an einen fahrerbremswunschabhängig gebildeten Soll-Bremsdruck im Sinne einer Bremsdruckregelung anpasst.

Die Funktionsweise des EBS ist dann wie folgt:
Im Zuge einer normalen Bremsung verbleibt das Auslassventil 21 in seiner federbelasteten Sperrstellung, während das Einlassventil 26 in Durchgangsstellung geschaltet wird, um den Steueranschluss 8 des Relaisventils 5 mit Vorratsdruck zu belüften. Dies sorgt für Bremszuspanndruck p21 bzw. p22 an den beiden Arbeitsanschlüssen 9, 10 des Relaisventils 5, welcher über die beiden durchgeschalteten 2/2-Wegeventile 11, 12 zu den Radbremszylindern 3, 4 durchgesteuert werden. Das Backup-Ventil 22 verbleibt dabei in seiner bestromten Sperrstellung, so dass der an ihm anstehende fahrerbremswunschabhängig gebildete Steuerdruck p4 nicht an den Steueranschluss 8 des Relaisventils 5 durchgeschaltet werden kann.

Falls der elektrische Bremskreis des EBS jedoch ausfällt, so können die Magnetventile 15, 16, 21, 22, 26 nicht mehr bestromt werden. So schaltet das Einlassventil 26 in seine stromlose und federbelastete Sperrstellung zurück, so dass kein Vorratsdruck mehr an den Steueranschluss 8 des Relaisventils 5 gelangt. Das Auslassventil 21 verbleibt ebenfalls in Sperrstellung. Der Steueranschluss 8 des Relaisventils 5 wird dann über das stromlos federbelastet in Durchgangsstellung geschaltete Backup-Ventil 22 mit dem vom Fußbremsventil erzeugten fahrerbremswunschabhängig gebildeten Steuerdruck p4 beaufschlagt, um die Radbremszylinder 3, 4 zuzuspannen.

Die ABS- bzw. ASR-Funktionen laufen dann wie bei den vorangehend beschriebenen Ausführungsformen ab, d.h. der Steueranschluss 8 des Relaisventils 5 wird funktionsabhängig über das Einlassventil 26 mit dem Vorratsdruck p11, über das Backup-Ventil 22 dem fahrerbremswunschabhängig gebildeten Steuerdruck p4 oder über das Auslassventil 21 mit der Drucksenke 23 des Auslassventils 21 verbunden.

In einer weiteren Ausbaustufe ist neben dem Drucksensor 27 zur Messung des Bremsdrucks p21 bzw. p22 ein weiterer Drucksensor 28 zur Messung des fahrerbremswunschabhängig gebildeten Bremssteuerdrucks p4 vorgesehen. Falls dann jeweils eine Drucksteuervorrichtung 1 gemäß Fig.6 für jede Achse, beispielsweise für eine Vorderachse und für eine Hinterachse vorgesehen wird, kann eine Fahrdynamikregelung (ESP) realisiert werden.

Das Steuergerät ist dabei ausgebildet, dass es bei einer durch die Fahrdynamikregelung (ESP) initiierten Bremsung das Auslassventil 21, das Backup-Ventil 22 sowie das Einlassventil 26 derart steuert, dass der Steueranschluss 8 des Relaisventils 5 abhängig von der Gierrate des Fahrzeugs durch den Vorratsdruck p11 des Druckreservoirs beaufschlagt wird. Hierzu werden beispielsweise das Auslassventil 21 sowie das Backup-Ventil 22 in ihre Sperrstellung geschaltet, während das Einlassventil 26 in Durchlassstellung geschaltet wird, um den Steueranschluss 8 des Relaisventils 5 zu belüften.

Gleichzeitig werden die 3/2-Wege-Vorsteuer-Magnetventile 15, 16 vom Steuergerät so angesteuert, dass beispielsweise das dem einen Bremszylinder 3 der einen Fahrzeugseite zugeordnete 2/2-Wegeventil 11 in Durchlassstellung geschaltet wird, um diesen Bremszylinder zu belüften und das dem anderen Bremszylinder 4 der anderen Fahrzeugseite zugeordnete 2/2-Wegeventil 12 in Sperrstellung geschaltet wird, um diesen Bremszylinder 4 vom Druckaufbau abzusperren. Es versteht sich, dass bei einem in der Gegenrichtung aufzubauenden Giermoment das 2/2-Wegeventil 11 in Sperrstellung und das 2/2-Wegeventil 12 in Durchlassstellung durch eine entsprechende Ansteuerung der 3/2-Wege-Vorsteuer-Magnetventile 15, 16 geschalten werden muss.

### Bezugszeichenliste

- 1: Drucksteuervorrichtung
- 2: Ventileinheit
- 3: Bremszylinder
- 4: Bremszylinder
- 5: Relaisventil
- 6: Vorratsanschluss RV
- 7: Entlüftungsanschluss RV
- 8: Steueranschluss RV
- 9: Arbeitsanschluss RV
- 10: Arbeitsanschluss RV
- 11: 2/2 - Wegeventil
- 12: 2/2 - Wegeventil
- 13: 3/2 - Wege-Magnetventil
- 14: Drucksenke
- 15: 3/2 - Wege-Vorsteuer-Magnetventil
- 16: 3/2 - Wege-Vorsteuer-Magnetventil
- 17: Steueranschluss
- 18: Steueranschluss
- 19: Drucksenke
- 20: Drucksenke
- 21: Auslassventil
- 22: Backup - Ventil
- 23: Drucksenke
- 24: Magnetventil
- 26: Einlassventil
- 27: Drucksensor
- 28: Drucksensor

## Patentansprüche

1. Drucksteuervorrichtung (1) für eine Druckmittel-Bremsanlage eines Fahrzeugs zum radindividuellen, wenigstens bremsschlupfabhängigen Steuern von Bremsdrücken in Bremszylindern (3, 4) von Rädern einer Achse, wobei
a) sie ein einziges Relaisventil (5) beinhaltet, mit einem von einem Vorratsdruck (p11) versorgten Vorratsanschluss (6), einem mit einer Drucksenke in Verbindung stehenden Entlüftungsanschluss (7), einem Steueranschluss (8) und mit wenigstens zwei Arbeitsanschlüssen (9, 10), wobei der eine Arbeitsanschluss (9) wenigstens einem Bremszylinder (3) eines Rades einer Fahrzeugseite der Achse und der andere Arbeitsanschluss (10) des Relaisventils (5) wenigstens einem Bremszylinder (4) eines Rades der anderen Fahrzeugseite der Achse zugeordnet ist,
b) jeder Arbeitsanschluss (9, 10) des Relaisventils (5) mit einem von einem Steuergerät direkt oder indirekt gesteuerten und jeweils einer Fahrzeugseite zugeordneten 2/2-Wegeventil (11, 12) verbunden ist, welches abhängig von der Ansteuerung durch das Steuergerät entweder eine Verbindung zwischen dem betreffenden Arbeitsanschluss (9, 10) des Relaisventils und dem zugeordneten Bremszylinder (3, 4) herstellt oder diese Verbindung sperrt, wobei
c) zur Realisierung einer Antriebsschlupfregelung (ASR) eine Ventileinrichtung (21, 22) mit einem einzigen vom Steuergerät elektrisch gesteuerten Magnetventil (26) derart zusammen wirkt, dass der Steueranschluss (8) des Relaisventils (5) abhängig vom Antriebsschlupf der Räder der Achse mit dem fahrerbremswunschabhängig gebildeten Steuerdruck (p4), einem Vorratsdruck (p11) eines Druckreservoirs oder mit einer Drucksenke (14; 23) verbunden wird, **dadurch gekennzeichnet, dass**
d) der Steueranschluss (8) des Relaisventils (5) mittels der durch zwei 2/2-Wege-Magnetventile (21, 22) gebildeten und mittels des Steuergeräts gesteuerten Ventileinrichtung entweder mit einem fahrerbremswunschabhängig gebildeten Bremssteuerdruck (p4) oder mit einer Drucksenke (23) verbindbar ist, wobei
e) das eine 2/2-Wege-Magnetventil (21) der die Ventileinrichtung bildenden beiden 2/2-Wege-Magnetventile (21, 22) ein Auslassventil ist, das den Steueranschluss (8) des Relaisventils (5) entweder mit einer Drucksenke (23) verbindet oder diese Verbindung sperrt, und dass
f) das andere 2/2-Wege-Magnetventil (22) der die Ventileinrichtung bildenden beiden 2/2-Wege-Magnetventile (21, 22) ein Backup-Ventil eines Elektronischen Bremssystems (EBS) mit vorrangigem elektro-pneumatischen Bremskreis und nachrangigem pneumatischem Bremskreis ist, dass den Steueranschluss (8) des Relaisventils (5) entweder mit dem fahrerbremswunschabhängig gebildeten Steuerdruck (p4) verbindet oder diese Verbindung sperrt, und dass
g) das zur Realisierung der Antriebsschlupfregelung der Achse vorgesehene einzige zusätzliche Magnetventil (26) ein als 2/2-Wege-Magnetventil ausgebildetes Einlassventil ist, mit einer Durchgangsstellung und einer Sperrstellung, wobei das Einlassventil in der Durchlassstellung den Steueranschluss (8) des Relaisventils (5) mit dem Vorratsdruck (p11) belüftet, wobei
h) die Drucksteuerventileinrichtung zur Ausbildung des Elektronischen Bremssystems (EBS) mit vorrangigem elektro-pneumatischen Bremskreis und nachrangigem pneumatischem Bremskreis wenigstens einen mit wenigstens einem Arbeitsanschluss (9, 10) des Relaisventils (5) in druckleitender Verbindung stehenden Drucksensor (27) beinhaltet, wobei
i) das Steuergerät ausgebildet ist, dass es durch Steuerung des Einlassventils (26) und des Auslassventils (21) den von dem wenigstens einen Drucksensor (27) gemessenen Ist-Bremsdruck an einen fahrerbremswunschabhängig gebildeten Soll-Bremsdruck anpasst.

2. Drucksteuervorrichtung nach Anspruch 1, **dadurch gekennzeichnet, dass** jedes einer Fahrzeugseite zugeordnete 2/2-Wegeventil (11, 12) durch jeweils ein vom Steuergerät elektrisch gesteuertes und derselben Fahrzeugseite zugeordnetes 3/2-Wege-Vorsteuer-Magnetventil (15, 16) pneumatisch vorgesteuert ist.

3. Drucksteuervorrichtung nach Anspruch 2, **dadurch gekennzeichnet, dass** die 2/2-Wegeventile (11, 12) Membranventile oder Boosterventile sind.

4. Drucksteuervorrichtung nach Anspruch 2 oder 3, **dadurch gekennzeichnet, dass** die 3/2-Wege-Vorsteuer-Magnetventile (15, 16) ausgebildet sind, dass sie abhängig von einer Steuerung durch das Steuergerät einerseits den Vorratsdruck (p11) des Druckreservoirs oder den fahrerbremswunschabhängigen gebildeten Steuerdruck (p4) an einen Steueranschluss (17, 18) des zugeordneten 2/2-Wegeventils (11, 12) durchsteuern oder andererseits diesen Steueranschluss (17, 18) mit einer Drucksenke (19, 20) verbinden.

5. Drucksteuervorrichtung nach einem der vorhergehenden Ansprüche, **dadurch gekennzeichnet, dass** das Steuergerät ausgebildet ist, dass durch Steuerung wenigstens der Ventileinrichtung (21, 22) und der jeweils einer Fahrzeugseite zugeordneten 2/2-Wegeventile (11, 12) eine radindividuelle Bremsschlupfregelung realisiert wird.

6. Drucksteuervorrichtung nach einem der vorhergehenden Ansprüche, **dadurch gekennzeichnet, dass** das Steuergerät ausgebildet ist, dass durch Steuerung wenigstens des einzigen zusätzlichen Magnetventils (26) eine radindividuelle Antriebsschlupfregelung (ASR) realisiert wird.

7. Drucksteuervorrichtung einem der vorhergehenden Ansprüche, **dadurch gekennzeichnet, dass** zur Ausbildung einer Fahrdynamikregelung (ESP) ein weiterer Drucksensor (28) zur Messung des fahrerbremswunschabhängig gebildeten Steuerdrucks (p4) vorgesehen ist.

8. Drucksteuervorrichtung einem der vorhergehenden Ansprüche, **dadurch gekennzeichnet, dass** das Steuergerät ausgebildet ist, dass es bei einer durch die Fahrdynamikregelung (ESP) initiierten Bremsung wenigstens die Ventileinrichtung (21, 22) sowie das einzige zusätzliche Magnetventil (26) derart steuert, dass
a) der Steueranschluss (8) des Relaisventils (5) abhängig von der Gierrate des Fahrzeugs durch den Vorratsdruck (p11) des Druckreservoirs beaufschlagt wird,
b) das dem einen Bremszylinder (3) der einen Fahrzeugseite zugeordnete 2/2-Wegeventil (11) in Durchlassstellung geschaltet, und
c) das dem anderen Bremszylinder (4) der anderen Fahrzeugseite zugeordnete 2/2-Wegeventil (12) in Sperrstellung geschaltet wird.

9. Fahrdynamisch geregelte elektronische Bremseinrichtung (EBS) eines Fahrzeugs umfassend eine Fahrdynamikregelung (ESP) mit je Achse wenigstens einer Drucksteuervorrichtung nach Anspruch 7 oder 8.

10. Bremseinrichtung eines Fahrzeugs umfassend wenigstens eine Drucksteuervorrichtung nach einem der Ansprüche 1 bis 8.

## Claims

1. A pressure control device (1) for a pressure-medium brake system of a vehicle for controlling the brake pressures in brake cylinders (3, 4) of wheels on an axle, this control being exercised on each individual wheel at least dependent on brake slip,
a) this device containing a single relay valve (5) having a supply port (6) supplied by a supply pressure (p11), a venting port (7) connected to a pressure sink, a control port (8) and at least two working ports (9, 10), one working port (9) being assigned to at least one brake cylinder (3) of a wheel on one vehicle side of the axle and the other working port (10) of the relay valve (5) being assigned to at least one brake cylinder (4) of a wheel on the other vehicle side of the axle,
b) each working port (9, 10) of the relay valve (5) being connected to a 2/2-way valve (11, 12) that is directly or indirectly controlled by a control unit, assigned to one side of the vehicle and either makes or breaks a connection between the relevant working port (9, 10) of the relay valve and the assigned brake cylinder (3, 4) depending on the manner of its actuation by the control unit,
c) a valve system (21, 22) cooperating in such a manner with a single solenoid valve (26) electrically controlled by the control that the control port (8) of the relay valve (5) is connected to the control pressure (p4) formed dependent on the driver's braking input, to a supply pressure (p11) of a pressure reservoir or to a pressure sink (14; 23) dependent on the drive slip of the wheels on the axle in order to create a traction control system (ASR),
d) it being possible to connect the control port (8) of the relay valve (5) either to a brake control pressure (p4) formed dependent on the driver's braking input or to a pressure sink (23) by means of the valve system made up of two 2/2-way solenoid valves (21, 22) and controlled by the control unit,
e) one 2/2-way solenoid valve (21) of the two 2/2-way solenoid valves (21, 22) making up the valve system being an outlet valve that either connects the control port (8) of the relay valve (5) to or disconnects it from a pressure sink (23), and
f) the other 2/2-way solenoid valve (22) of the two 2/2-way solenoid valves (21, 22) making up the valve system being a back-up valve of an electronic brake system (EBS) with a primary electro-pneumatic brake circuit and a secondary pneumatic brake circuit that either connects the control port (8) of the relay valve (5) to or disconnects it from the control pressure (p4) formed dependent on the driver's braking input, and
g) the single additional solenoid valve (26) provided to create the traction control system on the axle being an inlet valve designed as a 2/2-way solenoid valve having a through-flow position and a blocking position, in the through-flow position the inlet valve aerating the control port (8) with the supply pressure (p11),
h) the pressure control device (1) that creates the electronic brake system (EBS) and has a primary electro-pneumatic brake circuit and a secondary pneumatic brake circuit containing at least one pressure sensor (27) that is connected to at least one working port (9, 10) of the relay valve (5) so as to conduct pressure,
i) the control device being designed such that it adapts the actual brake pressure measured by the at least one pressure sensor (27) to a reference brake pressure formed dependent on the driver's braking input by controlling the inlet valve (26) and the outlet valve (21).

2. A pressure control device according to claim 1, **characterised in that** the 2/2-way valve (11, 12) assigned to each side of the vehicle is pneumatically pilot-controlled by a 3/2-way solenoid pilot control valve (15, 16) that is electrically controlled by the control unit and assigned to the same side of the vehicle.

3. A pressure control device according to claim 2, **characterised in that** the 2/2-way valves (11, 12) are diaphragm valves or booster valves.

4. A pressure control device according to claim 2 or 3, **characterised in that** depending on the manner of its actuation by the control unit the 3/2-way solenoid pilot control valves (15, 16) are designed so as to either feed the supply pressure (p11) of a pressure reservoir or the control pressure (p4) formed dependent on the driver's braking input to a control port (17, 18) of the assigned 2/2-way valve (11, 12) or connect this control port (17, 18) to a pressure sink (19, 20).

5. A pressure control device according to any one of the preceding claims, **characterised in that** the control unit is designed so as to create a brake slip control system for each individual wheel by controlling at least the valve system (21, 22) and the 2/2-way valve assigned (11, 12) to either side of the vehicle.

6. A pressure control device according to any one of the preceding claims, **characterised in that** the control unit is designed so as to create a traction control system (ASR) for each individual wheel by controlling at least the single additional solenoid valve (26)

7. A pressure control device according to any one of the preceding claims, **characterised in that** a further pressure sensor (28) for measuring the control pressure (p4) formed dependent on the driver's braking input is provided in order to create an electronic stability control programme (ESP).

8. A pressure control device according to any one of the preceding claims, **characterised in that** the control unit is designed such that during braking initiated by the electronic stability control programme (ESP) it controls at least the valve system (21, 22) and the single additional solenoid valve (26) in such a manner that:
a) the control port (8) of the relay valve (5) is supplied with the supply pressure (p11) of the pressure reservoir dependent on the yaw rate of the vehicle,
b) the 2/2-way valve (11) assigned to one brake cylinder (3) on one side of the vehicle is switched to the through-flow position, and
c) the 2/2-way valve (12) assigned to the other brake cylinder (4) on the other side of the vehicle is switched to the blocking position.

9. A vehicle dynamics-controlled electronic brake system (EBS) of a vehicle comprising an electronic stability control programme (ESP) having at least one pressure control device according to 7 or 8 per axle.

10. A brake system of a vehicle comprising at least one pressure control device according to any one of claims 1 to 8.

## Revendications

1. Dispositif (1) de commande de la pression pour un système de frein à fluide sous pression d'un véhicule afin de commander d'une manière individuelle à une roue et au moins en fonction du glissement du freinage des pressions de frein dans des cylindres (3, 4) de frein de roues d'un essieu, dans lequel
a) il contient une vanne (5) relais unique ayant un raccord (6) de réserve alimenté en une pression (p11) de réserve, un raccord (7) de purge communiquant avec un puits de pression, un raccord (8) de commande et au moins deux raccords (9, 10) de travail, l'un (9) des raccords de travail étant associé à au moins un cylindre (3) de frein d'une roue d'un côté du véhicule de l'essieu et l'autre raccord (10) de travail de la vanne (5) relais étant associé au moins à un cylindre (4) de frein d'une roue de l'autre côté du véhicule de l'essieu,
b) chaque raccord (9, 10) de travail de la vanne (5) relais communique avec une vanne (11, 12) à 2/2 voies commandée directement ou indirectement par un appareil de commande et associé, respectivement, à un côté du véhicule, laquelle, en fonction de la commande par l'appareil de commande, ménage une communication entre le raccord (9, 10) de travail concerné de la vanne relais et le cylindre (3, 4) de frein associé ou barre cette communication, dans lequel
c) pour la réalisation d'une régulation (ASR) de glissement en traction, un dispositif (21, 22) de vanne coopère avec une électrovanne (26) unique commandée électriquement par l'appareil de commande de manière à ce que le raccord (8) de commande de la vanne (5) relais soit, en fonction du glissement en traction des roues de l'essieu, par la pression (p4) de commande formée en fonction du souhait de freinage du conducteur, relié à une pression (p11) de réserve d'un réservoir de pression ou à un puits (14, 23) de pression, **caractérisé en ce que**
d) le raccord (8) de commande de la vanne (5) relais peut, au moyen du dispositif de vanne formé par deux électrovannes (21, 22) à 2/2 voies et commandé au moyen de l'appareil de commande, être relié soit à une pression (p4) de commande de frein formée en fonction du souhait de freinage du conducteur, soit à un puits (23) de pression, dans lequel
e) la une électrovanne (21) à 2/2 voies des deux électrovannes (21, 22) à 2/2 voies formant le dispositif de vanne est une vanne de sortie qui relie le raccord (8) de commande de la vanne (5) relais soit à un puits (23) de pression, soit barre cette liaison, et **en ce que**
f) l'autre électrovanne (22) à 2/2 voies des deux électrovannes (21, 22) à 2/2 voies formant le dispositif de vanne est une vanne de Backup d'un système (EBS) électronique de frein ayant un circuit électropneumatique de frein de premier rang et un circuit pneumatique de frein de deuxième rang qui soit relie le raccord (8) de commande de la vanne (5) relais à la pression (p4) de commande formée en fonction du souhait de freinage du conducteur, soit barre cette liaison, et **en ce que**
g) l'électrovanne (26) supplémentaire unique prévue pour réaliser la régulation du glissement en traction est une vanne d'entrée constituée en électrovanne à 2/2 voies ayant une position de passage et une position de barrage, la vanne d'entrée alimentant dans la position de passage le raccord (8) de commande de la vanne (5) relais en la pression (p11) de réserve, dans lequel
h) le dispositif de vanne de commande de la pression comporte, pour la constitution du système (EBS) électronique de frein ayant un circuit électropneumatique de frein de premier rang et un circuit pneumatique de frein de deuxième rang, au moins un capteur (27) de pression en liaison conduisant la pression avec au moins un raccord (9, 10) de travail de la vanne (5) relais, dans lequel
i) l'appareil de commande est constitué de manière à adapter à une valeur de frein de consigne formée en fonction du souhait de freinage du conducteur par commande de la vanne (26) d'entrée et de la vanne (21) de sortie la pression de frein réelle mesurée par le au moins un capteur (27) de pression.

2. Dispositif de commande de la pression suivant la revendication 1, **caractérisé en ce que** chaque vanne (11, 12) à 2/2 voies associée à un côté du véhicule est pilotée pneumatiquement par, respectivement, une électrovanne (15, 16) de pilotage à 3/2 voies commandée électriquement par l'appareil de commande et associée au même côté du véhicule.

3. Dispositif de commande de la pression suivant la revendication 2, **caractérisé en ce que** les vannes (11, 12) à 2/2 voies sont des vannes à membrane ou des vannes Booster.

4. Dispositif de commande de la pression suivant la revendication 2 ou 3, **caractérisé en ce que** les électrovannes (15, 16) de pilotage à 3/2 voies sont constituées de manière, en fonction d'une commande par l'appareil de commande, à appliquer, d'une part, la pression (p11) de réserve du réservoir de pression ou la pression (p4) de commande formée en fonction du souhait de freinage du conducteur à un raccord (17, 18) de commande de la vanne (11, 12) à 2/2 voies associé ou, d'autre part, à relier ce raccord (17, 18) de commande à un puits (19, 20) de pression.

5. Dispositif de commande de la pression suivant l'une des revendications précédentes, **caractérisé en ce que** l'appareil de commande est constitué de manière à réaliser, par la commande au moins du dispositif (21, 22) de vanne et des vannes (11, 12) à 2/2 voies associées, respectivement, à un côté du véhicule, une régulation du glissement en freinage individuelle à une roue.

6. Dispositif de commande de la pression suivant l'une des revendications précédentes, **caractérisé en ce que** l'appareil de commande est constitué de manière à réaliser, par la commande au moins de l'électrovanne (26) < supplémentaire unique, une régulation du glissement en traction (ASR) individuelle à une roue.

7. Dispositif de commande de la pression suivant l'une des revendications précédentes, **caractérisé en ce que**, pour constituer une régulation dynamique en marche (ESP), il est prévu un autre capteur (28) de pression pour mesurer la pression (p4) de commande formée en fonction du souhait de freinage du conducteur.

8. Dispositif de commande de la pression suivant l'une des revendications précédentes, **caractérisé en ce que** l'appareil de commande est constitué de manière à commander, lors d'un freinage amorcé par la régulation (ESP) dynamique en marche, au moins le dispositif (21, 22) de soupape ainsi que l'électrovanne (26) supplémentaire unique, de manière à ce que
a) le raccord (8) de commande de la vanne (5) relais soit soumis, en fonction du taux d'embardée du véhicule, à la pression (p11) de réserve du réservoir de pression,
b) la vanne (11) à 2/2 voies, associée à un cylindre (3) de frein d'un côté du véhicule, soit mise dans une position de passage, et
c) **en ce que** la vanne (12) à 2/2 voies, associée à l'autre cylindre (4) de frein de l'autre côté du véhicule, soit mise en une position de barrage.

9. Dispositif (EBS) électronique de frein régulé dynamiquement en marche d'un véhicule comprenant une régulation (ESP) dynamique en marche ayant pour chaque essieu au moins un système de commande de pression suivant la revendication 7 ou 8.

10. Dispositif de frein d'un véhicule comprenant au moins un système de commande de pression suivant l'une des revendications 1 à 8.
